# EUROPEAN PATENT APPLICATION

(11) **EP 4 561 260 A1**
(43) Date of publication of application: **28.05.2025**
(21) Application number: 23849012.2
(22) Date of filing: 26.05.2023
(51) Int. Cl.: H04W 92/02, H04W 92/04

(54) **MESSAGE TRANSMISSION METHOD AND COMMUNICATION APPARATUS**

(30) Priority: 30.07.2022 CN 202210912605
(71) Applicant: Huawei Technologies Co., Ltd., Shenzhen, Guangdong 518129 (CN)
(72) Inventor: ZHANG, Jidong, Shenzhen, Guangdong 518129 (CN); ZONG, Zaifeng, Shenzhen, Guangdong 518129 (CN); SHU, Lin, Shenzhen, Guangdong 518129 (CN)
(74) Representative: Körber, Martin Hans
(86) International application number: PCT/CN2023/096618
(87) International publication number: WO 2024/027302

(57) **Abstract**

This application provides a message transmission method and a communication apparatus. The method may be performed by a link load orchestration function instance or a chip in the link load orchestration function instance. The link load orchestration function instance is connected to a service-based instance through a service-based interface, and the link load orchestration function instance is connected to a non-service-based instance through a non-service-based interface. The method includes: receiving a first message from a first instance through a first-type interface; determining information about a second-type transmission interface based on the first message; and sending a second message to a second instance through the second-type interface based on the first message and the information about the transmission interface, where the first-type interface is the service-based interface, and the second-type interface is the non-service-based interface; or the first-type interface is the non-service-based interface, and the second-type interface is the service-based interface. Therefore, flexibility of message transmission in a communication system can be improved.

## Description

This application claims priority to Chinese Patent Application No. 202210912605.2, filed with the China National Intellectual Property Administration on July 30, 2022 and entitled "MESSAGE TRANSMISSION METHOD AND COMMUNICATION APPARATUS", which is incorporated herein by reference in its entirety.

### TECHNICAL FIELD

This application relates to the field of communication technologies, and more specifically, to a message transmission method and a communication apparatus.

### BACKGROUND

In a current communication system, there are mutual access interfaces agreed on between a plurality of groups of two different instances, that is, non-service-based interfaces. For example, an access and mobility management function (access and mobility management function, AMF) instance communicates with a radio access network (radio access network, RAN) instance through a non-service-based interface N2 interface, and a session management function (session management function, SMF) instance communicates with a user plane function (user plane function, UPF) instance through an N4 interface. There is a strong coupling relationship between two instances that establish a communication connection through a non-service-based interface, and communication needs to be performed based on a binding relationship between a physical interface and a context of a terminal device (user equipment, UE). This mechanism makes flexibility of interaction between a plurality of groups of instances poor, resulting in inflexible message transmission in the communication system.

### SUMMARY

This application provides a message transmission method and a communication apparatus, to improve flexibility of message transmission.

According to a first aspect, a message routing method is provided. The method may be performed by a link load orchestration function instance or a chip in the link load orchestration function instance. The link load orchestration function instance is connected to a service-based instance through a service-based interface, and the link load orchestration function instance is connected to a non-service-based instance through a non-service-based interface. The method includes: receiving a first message from a first instance through a first-type interface; determining information about a second-type transmission interface based on the first message; and sending a second message to a second instance through the second-type interface based on the first message and the information about the transmission interface, where the first-type interface is the service-based interface, and the second-type interface is the non-service-based interface; or the first-type interface is the non-service-based interface, and the second-type interface is the service-based interface.

Optionally, the link load orchestration function instance supports a plurality of types of non-service-based interfaces, and is connected to a plurality of types of non-service-based instances through plurality of types of non-service-based interfaces.

It should be noted that the link load orchestration function instance may also be referred to as a link load orchestration function LLOF instance. In this application, the link load orchestration function instance and the LLOF instance may have a same meaning. Details are not described below.

According to this technical solution, the LLOF instance may have information about transmission interfaces of a plurality of types of interfaces, for example, information about a service-based-type transmission interface and information about a non-service-based-type transmission interface. In addition, the LLOF instance may have a capability of converting a message received from the service-based interface into a message sent by the non-service-based interface, and a capability of converting a message received from the non-service-based interface into a message sent by the service-based interface. Therefore, in a communication system including the LLOF instance, when two instances having different types of interfaces need to communicate with each other, the instances may no longer need to support both the service-based interface and the non-service-based interface. This improves flexibility of message transmission in the communication system.

In addition, one LLOF instance may support a plurality of types of non-service-based interfaces. For example, one LLOF instance may support non-service-based interfaces such as an N2 interface, an N4 interface, and an N26 interface. In this way, a quantity of instances that need to support the non-service-based interface in the communication system can be reduced, and flexibility of message transmission in the communication system can be further improved.

With reference to the first aspect, in some implementations of the first aspect, the determining information about a transmission interface based on the first message includes: determining a context of a terminal device based on the first message, and determining the information about the transmission interface based on the context of the terminal device.

According to this technical solution, the LLOF instance may store the context of the terminal device, and determine the information about the transmission interface based on the context of the terminal device.

With reference to the first aspect, in some implementations of the first aspect, the first-type interface is the service-based interface, the second-type interface is the non-service-based interface, the first message includes a context identifier of the terminal device, the determining a context of a terminal device based on the first message includes: determining the context of the terminal device based on the context identifier, and the information about the transmission interface includes at least one of the following information: IP address information of the non-service-based instance and a port number of the non-service-based instance.

According to this technical solution, the service-based instance may include the context identifier of the terminal device in the first message. Further, the LLOF instance may obtain the context of the terminal device based on the context identifier, and then determine the information about the transmission interface. A message is sent to the non-service-based instance based on the IP address information and/or port number in the information about the transmission interface, so that the service-based instance does not need to support sending the message to the non-service-based instance through the non-service-based interface. This can improve flexibility of message transmission.

Further, the context of the terminal device includes the information about the transmission interface.

With reference to the first aspect, in some implementations of the first aspect, the first-type interface is the service-based interface, the second-type interface is the non-service-based interface, and the first message includes a notification address. The method further includes: sending, based on the notification address, a notification message to the service-based instance through the service-based interface, where the notification message includes at least one of the following information: result information and reason information, the result information indicates whether the second message is successfully sent, and the reason information indicates a reason why the second message fails to be sent; and/or receiving, from the non-service-based instance, a first response message that is in response to the second message, and sending a second response message to the service-based instance based on the first response message and the notification address.

According to this technical solution, the service-based instance may include the notification address of the service-based instance in the first message. Further, the LLOF instance may return, to the service-based instance based on the notification address, information indicating whether the second message is successfully sent, so that the service-based instance can learn, based on feedback of the LLOF instance, whether the message is successfully sent. This can improve message transmission reliability. Alternatively, the LLOF instance may send, to the service-based instance based on the notification address, a response message returned by the non-service-based instance. The service-based instance can obtain feedback of the non-service-based instance, and can determine whether message transmission is successful depending on whether the response message is received. This can improve message transmission reliability.

With reference to the first aspect, in some implementations of the first aspect, the first message is used to request a first link load orchestration function instance to send parameter information in the first message.

According to this technical solution, the service-based instance may request the LLOF instance to send the parameter information in the first message to the non-service-based instance, so that the LLOF instance may send, to the non-service-based instance as requested, a message including the parameter information. The service-based instance may send the parameter information to the non-service-based instance by requesting the LLOF without supporting the non-service-based interface. This can improve flexibility of message transmission in a communication system.

With reference to the first aspect, in some implementations of the first aspect, the first message includes type information, and the type information indicates the second type; or a message type of the first message is associated with the second type.

According to this technical solution, the LLOF instance can support a plurality of types of non-service interfaces. The service-based instance may indicate, by using indication of the type information or a format of the first message, a type of non-service-based interface that is used by the LLOF instance to send a message. This can improve message transmission reliability.

With reference to the first aspect, in some implementations of the first aspect, the first message includes a binary bit stream of the parameter information, and the second message includes the binary bit stream of the parameter information in the first message; or the method further includes: performing encoding processing on the parameter information in the first message, where the second message includes a binary bit stream of encoding-processed parameter information.

According to this technical solution, the service-based instance may directly send the parameter information to the LLOF instance. To be specific, the service-based instance may directly send the parameter information to the LLOF instance without performing encoding processing on the parameter information, and the LLOF instance performs encoding processing and sends the parameter information to the non-service-based instance. This can reduce processing burden of the service-based instance. Alternatively, the service-based instance may perform encoding processing on the parameter information, and send, in the first message, an encoded binary bit stream to the LLOF instance. In this way, the LLOF instance may not perform encoding processing on the parameter information, and the LLOF instance may not understand a meaning of the parameter information. This simplifies logic of the LLOF instance.

With reference to the first aspect, in some implementations of the first aspect, the first-type interface is the non-service-based interface, the second-type interface is the service-based interface, and the information about the transmission interface includes a notification address of the service-based instance.

According to this technical solution, the LLOF instance may store the information about the transmission interface including the notification address of the service-based instance, and the LLOF instance may send, to the service-based instance based on the notification address, information sent by the non-service-based instance. The service-based instance may obtain information sent by the non-service-based message without supporting the non-service-based interface. This can improve flexibility of message transmission in a communication system.

With reference to the first aspect, in some implementations of the first aspect, the first message includes routing identification information. The determining a context of a terminal device based on the first message includes: determining the context of the terminal device based on the routing identification information.

According to this technical solution, the context of the terminal device may include the routing identification information. Therefore, the LLOF instance finds the context of the terminal device based on the routing identification information in the first message, to determine a notification address of the service-based instance, and sends a message to the service-based instance based on the notification address. The non-service-based instance may include the routing identification information and send a message to the service-based instance. The non-service-based instance can transmit the message to the service-based instance without sensing an address of the service-based instance. This can implement low coupling between the two instances, and improve flexibility of message transmission in a communication system.

With reference to the first aspect, in some implementations of the first aspect, the determining a context of a terminal device based on the first message includes: creating the context of the terminal device based on the first message, where the context of the terminal device includes information about the non-service-based instance, the second message includes a context identifier of the terminal device, and the information about the non-service-based instance includes at least one of the following information: IP address information of the non-service-based instance and a port number of the non-service-based instance.

According to this technical solution, if the LLOF instance does not have the context of the terminal device, the LLOF instance may create the context of the terminal device based on the first message, store the information about the non-service-based instance in the terminal context, and include the context identifier in the second message and send the second message to the service-based instance. In this way, the service-based instance may subsequently communicate with the LLOF instance based on the context identifier. This can improve flexibility of message transmission in a communication system.

With reference to the first aspect, in some implementations of the first aspect, the method further includes: the first message includes a binary bit stream of parameter information, and the second message includes the binary bit stream; or the method further includes: decoding the binary bit stream in the first message, where the second message includes decoding-processed parameter information.

According to this technical solution, the LLOF instance may decode a message sent by the non-service-based instance, so that the service-based instance receives the decoded parameter information that can be interpreted. This can reduce operating burden of the service-based instance. The LLOF instance may alternatively not decode the non-service-based message. This reduces complexity of the LLOF.

With reference to the first aspect, in some implementations of the first aspect, the method further includes: determining the second instance based on the context of the terminal device and the first message, where the context of the terminal device includes information about an instance set, and the instance set includes the second instance.

Optionally, the information about the instance set is an identifier of the instance set or an IP address and/or a port number corresponding to the instance set.

According to this technical solution, the context of the terminal device in the LLOF instance may include the information about the instance set. The instance set may include at least one instance, and the at least one instance may provide a same function. The LLOF instance may select one instance from the instance set as the second instance based on the first message, or when the context of the terminal device is created in the LLOF instance, the instance set is determined based on a destination address and/or port number of the first message, and the second instance is determined from the instance set. This can improve flexibility of message transmission in a communication system.

With reference to the first aspect, in some implementations of the first aspect, the method further includes: determining that the second instance is faulty, or determining that a capacity of the instance set changes, where the instance set includes the second instance; determining a third instance based on the context of the terminal device, where the context of the terminal device includes the information about the instance set, and the instance set further includes the third instance; and sending, based on the first message, a third message to the third instance through the second-type interface.

Optionally, the determining that the second instance is faulty includes: the LLOF instance receives indication information indicating that the second instance is faulty; and the determining that a capacity of the instance set changes includes: alternatively, the LLOF instance receives information indicating that the capacity of the instance set changes.

According to this technical solution, the LLOF instance can be responsible for replacing a service-based instance. When the service-based instance is faulty, a corresponding instance in the context of the terminal device can be replaced with another available instance in the instance set, to implement reliable transmission of a message in a communication system. In addition, the LLOF instance shields a fault of the service-based instance, that is, the non-service-based instance does not sense the fault and reselection of the service-based instance. In other words, even if a connection between the LLOF instance and the second instance is replaced with a connection between the LLOF instance and the third instance, a communication link between the LLOF instance and the first instance may not need to be re-established.

Optionally, the method further includes: determining that the second instance is faulty; and deleting information about the second instance in the context of the terminal device.

According to this technical solution, the LLOF may flexibly adjust a capacity change of the instance set, so that a communication system is more flexible.

With reference to the first aspect, in some implementations of the first aspect, the method further includes: receiving an allocation request message from the service-based instance, where the allocation request message is used to request allocation of the routing identification information; and sending the routing identification information to the non-service-based instance, where the routing identification information is used for information transmission between the service-based instance and the non-service-based instance.

Optionally, the LLOF instance sends the routing identification information to the service-based instance in response to the allocation request message, and a message sent by the service-based instance to the non-service-based instance via the LLOF instance includes the routing identification information.

Optionally, the allocation request message includes the context identifier of the terminal device. The LLOF instance may store the routing identifier in the context of the terminal device based on the context identifier of the terminal device.

According to this technical solution, the LLOF instance may receive a request of the service-based instance, and allocate routing identification information used for information transmission between the service-based instance and the non-service-based instance. Subsequently, the non-service-based instance may use the routing identification information to communicate with the service-based instance. This can improve flexibility of message transmission in a communication system.

With reference to the first aspect, in some implementations of the first aspect, if the non-service-based instance is a radio access network instance, the service-based instance is an access and mobility management instance; if the non-service-based instance is a user plane function instance, the service-based instance is a session management instance; or if the non-service-based instance is a mobility management entity instance, the service-based instance is an authentication management function instance.

According to this technical solution, the LLOF instance can be responsible for interaction between the radio access network RAN instance and the access and mobility management function AMF instance, interaction between the user plane function UPF instance and the session management function SMF instance, and interaction between the mobility management entity MME instance and the AMF instance, so that neither the AMF nor the SMF needs to support the non-service-based interface, and message exchange in a communication system is more flexible.

Optionally, the sending a second message to a second instance through the second-type interface includes: sending the second message to the second instance through the second-type interface of a second LLOF, where the second LLOF and the LLOF instance share the context of the terminal device.

According to this technical solution, different LLOF instances may share the context of the terminal device. In addition, when an LLOF instance selected by the first instance cannot directly send a message to the second instance, for example, the LLOF and the second instance are deployed in different data centers DCs, the LLOF instance may transfer the message via an LLOF instance having an interface with the second instance to transfer information. This improves flexibility of message transmission.

Optionally, the routing identification information includes at least one of the following information: an access and mobility management function, next generation application protocol, user equipment, identifier (access and mobility management function, next generation application protocol, user equipment, identifier, AMF NGAP UE ID), user-level control plane protocol (general tunnel protocol-control, GTP-C) tunnel information, and session-level packet forwarding control protocol (packet forwarding control protocol, PFCP) session endpoint information. The routing identification information is used for information transmission between the service-based instance and the non-service-based instance.

Optionally, a type of a message transmitted through the non-service-based interface is any one of the following types: next generation application protocol NGAP, packet forwarding control protocol PFCP, or control plane protocol GTP-C.

According to a second aspect, a message transmission communication apparatus is provided. The apparatus includes a transceiver module and a processing module. The transceiver module can be connected to a service-based instance through a service-based interface. The transceiver module can be connected to a non-service-based instance through a non-service-based interface. The transceiver module is configured to receive a first message from a first instance through a first-type interface. The processing module is configured to determine information about a second-type transmission interface based on the first message. The transceiver module is further configured to send a second message to a second instance through the second-type interface based on the first message and the information about the transmission interface, where the first-type interface is the service-based interface, and the second-type interface is the non-service-based interface; or the first-type interface is the non-service-based interface, and the second-type interface is the service-based interface.

According to this technical solution, an LLOF instance may have information about transmission interfaces of a plurality of types of interfaces, for example, information about a service-based-type transmission interface and information about a non-service-based-type transmission interface. In addition, the LLOF instance may have a capability of converting a message received from the service-based interface into a message sent by the non-service-based interface, and a capability of converting a message received from the non-service-based interface into a message sent by the service-based interface. Therefore, in a communication system including the LLOF instance, when two instances having different types of interfaces need to communicate with each other, the instances may no longer need to support both the service-based interface and the non-service-based interface. In addition, when a communication connection between the LLOF instance and one of the instances needs to change, a communication connection between the LLOF instance and the other instance may not need to be re-established. This improves flexibility of message transmission in the communication system.

In addition, one LLOF instance may support a plurality of types of non-service-based interfaces. For example, one LLOF instance may support non-service-based interfaces such as an N2 interface, an N4 interface, and an N26 interface. In this way, a quantity of instances that need to support the non-service-based interface in the communication system can be reduced, and flexibility of message transmission in the communication system can be further improved.

With reference to the second aspect, in some implementations of the second aspect, the processing module is further configured to: determine a context of a terminal device based on the first message, and determine the information about the transmission interface based on the context of the terminal device.

With reference to the second aspect, in some implementations of the second aspect, the first-type interface is the service-based interface, the second-type interface is the non-service-based interface, and the first message includes a context identifier of the terminal device. The processing module is configured to: determine the context of the terminal device based on the context identifier, and determine, based on the context of the terminal device, that the information about the transmission interface includes at least one of the following information: IP address information of the non-service-based instance and a port number of the non-service-based instance.

With reference to the second aspect, in some implementations of the second aspect, the first-type interface is the service-based interface, the second-type interface is the non-service-based interface, and the first message includes a notification address. The transceiver module is configured to send, based on the notification address, a notification message to the service-based instance through the service-based interface, where the notification message includes at least one of the following information: result information and reason information, the result information indicates whether the second message is successfully sent, and the reason information indicates a reason why the second message fails to be sent; and/or the transceiver module is configured to: receive, from the non-service-based instance, a first response message that is in response to the second message, and send a second response message to the service-based instance based on the first response message and the notification address.

With reference to the second aspect, in some implementations of the second aspect, the first message is used to request a first link load orchestration function instance to send parameter information in the first message.

With reference to the second aspect, in some implementations of the second aspect, the first message includes type information, and the type information indicates the second type; or a message type of the first message is associated with the second type.

With reference to the second aspect, in some implementations of the second aspect, the first message includes a binary bit stream of the parameter information, and the second message includes the binary bit stream; or the processing module is configured to perform encoding processing on the parameter information in the first message, where the second message includes a binary bit stream of encoding-processed parameter information.

With reference to the second aspect, in some implementations of the second aspect, the first-type interface is the non-service-based interface, the second-type interface is the service-based interface, and the information about the transmission interface includes a notification address of the service-based instance.

With reference to the second aspect, in some implementations of the second aspect, the first message includes routing identification information. The processing module is configured to determine the context of the terminal device based on the routing identification information, where the context of the terminal device includes the routing identification information and the information about the transmission interface, and the second message includes the context identifier of the terminal device.

With reference to the second aspect, in some implementations of some aspects of the second aspect, the processing module is configured to create the context of the terminal device based on the first message, where the context of the terminal device includes information about the non-service-based instance, the second message includes a context identifier of the terminal device, and the information about the non-service-based instance includes at least one of the following information: IP address information of the non-service-based instance and a port number of the non-service-based instance.

With reference to the second aspect, in some implementations of the second aspect, the first message includes a binary bit stream of parameter information, and the second message includes the binary bit stream; or the transceiver module is configured to decode the binary bit stream in the first message, where the second message includes decoding-processed parameter information.

With reference to the second aspect, in some implementations of the second aspect, the processing module is configured to determine the second instance based on the context of the terminal device and the first message, where the context of the terminal device includes information about an instance set, and the instance set includes the second instance.

With reference to the second aspect, in some implementations of the second aspect, the processing module is configured to determine that the second instance is faulty, or the processing module is configured to determine that a capacity of the instance set changes, where the instance set includes the second instance. The processing module is further configured to determine a third instance based on the context of the terminal device, where the context of the terminal device includes the information about the instance set, and the instance set further includes the third instance. The transceiver module is configured to send, based on the first message, a third message to the third instance through the second-type interface.

The implementations of the second aspect are the method in a communication apparatus corresponding to the implementations of the first aspect. For beneficial technical effects of the implementations of the second aspect, refer to descriptions of related implementations of the first aspect. Details are not described herein.

According to a third aspect, a communication apparatus is provided. The communication apparatus has a function of implementing the method according to the first aspect or any one of the possible implementations of the first aspect. The function may be implemented by hardware, or may be implemented by hardware by executing corresponding software. The hardware or the software includes one or more units corresponding to the foregoing function.

According to a fourth aspect, a communication apparatus is provided, and includes a processor. Optionally, the apparatus may further include a transceiver and a memory. The memory is configured to store a computer program, and the processor is configured to: invoke and run the computer program stored in the memory, and control the transceiver to receive and send a signal, to enable the communication apparatus to perform the method according to the first aspect or any one of the possible implementations of the first aspect.

For example, the communication apparatus is a link load orchestration function instance.

According to a fifth aspect, a communication apparatus is provided, and includes a processor and a memory. Optionally, the apparatus may further include a transceiver. The memory is configured to store a computer program, and the processor is configured to: invoke and run the computer program stored in the memory, and control the transceiver to receive and send a signal, to enable the communication apparatus to perform the method according to the second aspect or any one of the possible implementations of the second aspect.

For example, the communication apparatus is a link load orchestration function instance.

According to a sixth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to the first aspect or any one of the possible implementations of the first aspect is performed. The communication apparatus may be a chip used in a link load orchestration function instance.

According to a seventh aspect, a computer-readable storage medium is provided. The computer-readable storage medium stores computer instructions. When the computer instructions are run on a computer, the method according to the first aspect or any one of the possible implementations of the first aspect is performed.

According to an eighth aspect, a computer-readable storage medium is provided. The computer-readable storage medium stores computer instructions. When the computer instructions are run on a computer, the method according to the second aspect or any one of the possible implementations of the second aspect is performed.

According to a ninth aspect, a computer program product is provided. The computer program product includes computer program code. When the computer program code is run on a computer, the method according to the first aspect or any one of the possible implementations of the first aspect is performed.

According to a tenth aspect, a computer program product is provided. The computer program product includes computer program code. When the computer program code is run on a computer, the method according to the second aspect or any one of the possible implementations of the second aspect is performed.

According to an eleventh aspect, a wireless communication system is provided, and includes the communication apparatus according to the second aspect.

According to a twelfth aspect, a wireless communication system is provided, and includes the communication apparatus according to any one or more of the second aspect to the eleventh aspect, or the communication apparatus according to any possible implementation of any one of the aspects.

### BRIEF DESCRIPTION OF DRAWINGS

FIG. 1 is a diagram of a network architecture to which an embodiment of this application is applicable;
FIG. 2 is a diagram of protocol stacks of an N2 interface and an Nllof interface according to an embodiment of this application;
FIG. 3 is a diagram of protocol stacks of an N4 interface and an Nllof interface according to an embodiment of this application;
FIG. 4 is a diagram of protocol stacks of an N26 interface and an Nllof interface according to an embodiment of this application;
FIG. 5 is a diagram of an instance deployment system according to an embodiment of this application;
FIG. 6 is a schematic flowchart of a message transmission method according to an embodiment of this application;
FIG. 7 is a schematic flowchart of an example of a message transmission method according to an embodiment of this application;
FIG. 8 is a schematic flowchart of another example of a message transmission method according to an embodiment of this application;
FIG. 9 is a schematic flowchart of a routing identifier allocation method according to an embodiment of this application;
FIG. 10 is a schematic flowchart of a message transmission method via a plurality of LLOF instances according to an embodiment of this application;
FIG. 11 is a schematic flowchart of a message transmission method for replacing an instance according to an embodiment of this application; and
FIG. 12 and FIG. 13 are diagrams of structures of possible communication apparatuses according to embodiments of this application.

### DESCRIPTION OF EMBODIMENTS

The following describes the technical solutions of this application with reference to the accompanying drawings.
For ease of understanding of the technical solutions of this application, a communication system to which the technical solutions of this application may be applied is first described.

The technical solutions provided in this application may be applied to various communication systems, for example, a wireless mobile cellular communication system, including a 5^{th} generation (5^{th} generation, 5G) or NR system, an LTE system, an LTE frequency division duplex (frequency division duplex, FDD) system, and an LTE time division duplex (time division duplex, TDD) system. The technical solutions provided in this application may be further applied to a non-terrestrial network (non-terrestrial network, NTN) communication system such as a satellite communication system. The technical solutions provided in this application may be further applied to device-to-device (device-to-device, D2D) communication system, vehicle-to-everything (vehicle-to-everything, V2X) communication system, machine-to-machine (machine-to-machine, M2M) communication system, machine type communications (machine type communications, MTC) system, an internet of things (internet of things, IoT) communication system, or another communication system. The technical solutions provided in this application may be further applied to a future communication system, for example, a 6^{th} generation mobile communication system.

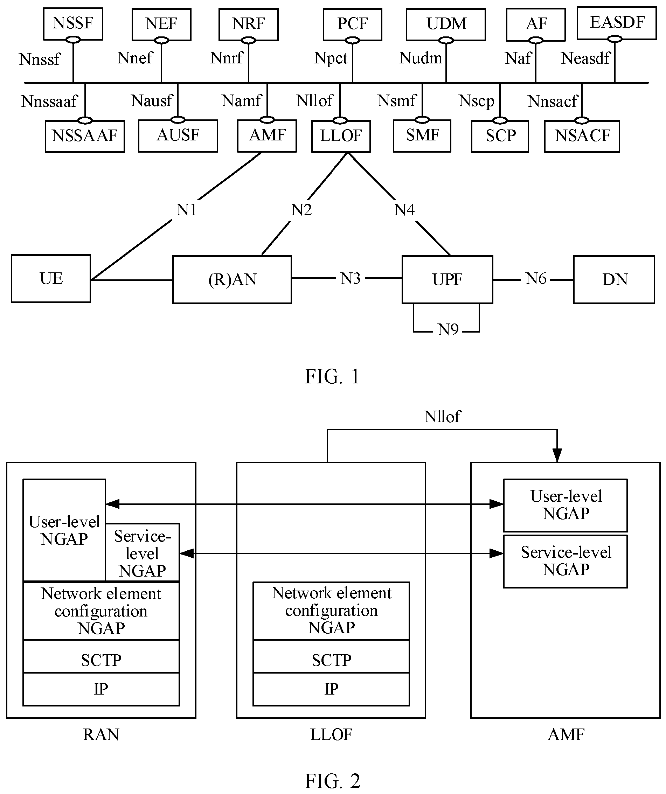

FIG. 1 is a diagram of a network architecture to which an embodiment of this application is applicable.

A service-based architecture and a communication mode of the service-based architecture are briefly described. Refer to FIG. 1. An embodiment of this application provides a service-based network architecture 100, including a plurality of network functions (network functions, NFs).
1. A network slice selection network element is mainly configured to provide slice selection. In 5G communication, the network slice selection network element may be a network slice selection function (network slice selection function, NSSF). Nnssf is a service-based interface provided by the NSSF. The NSSF may communicate with another network function through Nnssf.
2. A network exposure network element is configured for secure exposure of services, capabilities, and the like that are provided by a 3rd generation partnership project (3rd generation partnership project, 3GPP) network function. In 5G communication, the network exposure network element may be a network exposure function (network exposure function, NEF) network element. Nnef is a service-based interface provided by the NEF. The NEF may communicate with another network function through Nnef.
3. A network repository network element is configured to maintain profile of network function entities and their supported services, and support service discovery, network element entity discovery, and the like. In 5G communication, the network repository network element may be a network repository function (network repository function, NRF) network element. Nnrf is a service-based interface provided by the NRF. The NRF may communicate with another network function through Nnrf.
4. A policy control network element is configured for a unified policy framework to govern network behavior, and provides policy rule information and the like for a control plane function network element (for example, an AMF or an SMF). In 5G communication, the policy control network element may be a policy control function (policy control function, PCF) network element. Npcf is a service-based interface provided by the PCF. The PCF may communicate with another network function through Npcf.
5. A data management network element is configured for user identification handling, access authorization, registration, mobility management, or the like. In 5G communication, the data management network element may be a unified data management (unified data management, UDM) network element. Nudm is a service-based interface provided by the UDM. The UDM may communicate with another network function through Nudm.
6. An application network element is configured for application influence on data routing, accessing network exposure function, interacting with the policy framework for policy control, or the like. In 5G communication, the application network element may be an application function (application function, AF) network element. Naf is a service-based interface provided by the AF. The AF may communicate with another network function through Naf.
7. An edge application server discovery network element is mainly configured to assist in edge application server discovery. In 5G communication, the edge application server discovery network element may be an edge application server discovery function (edge application server discovery function, EASDF). Neasdf is a service-based interface provided by the EASDF. The EASDF may communicate with another network function through Neasdf.
8. A network slice-specific authentication and authorization network element is mainly configured for network slice-specific authentication and authorization and the like. In 5G communication, the network slice-specific authentication and authorization network element may be a network slice-specific authentication and authorization function (network slice-specific authentication and authentication, NSSAAF). Nnssaaf is a service-based interface of the NSSAAF. The NSSAAF may communicate with another network function through Nnssaaf.
9. An authentication service network element is mainly configured for user authentication and the like. In 5G communication, the authentication service network element may be an authentication service function (authentication server function, AUSF) network element. Nausf is a service-based interface provided by the AUSF. The AUSF may communicate with another network function through Nausf.
10. An access management network element is mainly configured for mobility management, access management, and the like, and may be configured to implement functions, for example, lawful intercept or access authorization (or authentication), in a mobility management entity (mobility management entity, MME) function other than session management. In 5G communication, the access management network element may be an access and mobility management function (access and mobility management function, AMF) network element. Namf is a service-based interface provided by the AMF. The AMF may communicate with another network function through Namf.
11. A session management network element is mainly configured for session management, IP (internet protocol, IP) address allocation and management of a terminal device, selection of user equipment plane function, termination of interfaces towards policy control functions and charging functions, downlink data notification, and the like. In 5G communication, the session management network element may be a session management function (session management function, SMF) network element. Nsmf is a service-based interface provided by the SMF. The SMF may communicate with another network function through Nsmf.
12. A network slice admission control network element is mainly configured for controlling per network slice and the like. In 5G communication, the network slice admission control network element may be a network slice admission control function (network slice admission control function, NSACF). Nnsacf is a service-based interface provided by the NSACF. The NSACF may communicate with another network function through Nnsacf.
13. User equipment (user equipment, UE) may include various handheld devices, vehicle-mounted devices, wearable devices, and computing devices that have a wireless communication function, or other processing devices connected to a wireless modem, and terminals in various forms such as a mobile station (mobile station, MS), a terminal (terminal), user equipment (user equipment, UE), and a software terminal, for example, a water meter, an electricity meter, and a sensor.
14. A (radio) access network (radio access network, (R)AN) network element is configured to provide a network access function for authorized user equipment in a specific area, and can use transmission tunnels with different quality based on user equipment levels, service requirements, and the like.
   The RAN can manage radio resources and provide an access service for a terminal device, to forward a control signal and user equipment data between the terminal and a core network. The RAN may also be understood as a base station in a conventional network.
15. A user plane network element is configured for packet routing and forwarding, quality of service (quality of service, QoS) handling for user plane data, or the like. In 5G communication, the user plane network element may be a user plane function (user plane function, UPF) network element.
16. A data network (data Network, DN) network element is configured to provide a network for transmitting data, for example, an internet network. The DN network element may be a data network authentication, authorization, and accounting (data network authentication, authorization, accounting), an application server (application function), or the like.
   It should be noted that the network architecture to which this embodiment of this application is applicable may further include a link load orchestration network element.
17. The link load orchestration network element is configured to support both a service-based interface and a non-service-based interface. The link load orchestration network element may also be referred to as a link load orchestration function (link load orchestration function, LLOF). The LLOF can communicate with non-service-based functions such as a RAN, a UPF, and an MME, and communicate with control plane functions such as an AMF and an SMF. Therefore, the control plane functions such as the AMF and the SMF may transfer, to the LLOF through the service-based interface, a message that needs to be sent to a non-service-based function.

For example, Nllof is a service-based interface provided by the LLOF, and the LLOF may communicate with another function such as the AMF or the SMF through the service-based interface Nllof. An N2 interface is a reference point between the LLOF and the RAN. N4 is a reference point between the LLOF and the UPF. In addition, although not shown in the figure, an N26 interface is a reference point between the LLOF and the MME. Control plane functions such as the AMF, the SMF, the AUSF, and the PCF can communicate with the LLOF through the service-based interface Nllof, and the LLOF performs control plane message routing. Therefore, control plane functions such as the AMF and the SMF may no longer require a non-service-based interface. For example, the AMF may not need to support the non-service-based interface N2, and the SMF may not need to support the non-service-based interface N4.

For better understanding of this embodiment of this application, the following separately describes, with reference to FIG. 2 to FIG. 4, the N2 interface, the N4 interface, and the N26 interface provided by the LLOF.

FIG. 2 is a diagram of protocol stacks of an N2 interface and an Nllof interface according to an embodiment of this application.

Refer to FIG. 2. There is message exchange based on an internet protocol (internet protocol, IP) and a stream control transmission protocol (stream control transmission protocol, SCTP) between a RAN and an LLOF. Next generation application protocol (next generation application protocol, NGAP) message exchange may be performed between the RAN and an AMF via the LLOF. NGAP messages may be classified into a user-level NGAP message and a service-level NGAP message. The user-level NGAP message may be related to a UE, and provide UE-related signaling and connections, for example, used to transmit an uplink/downlink NAS message. The service-level NGAP message is a message related to a specific service, for example, a multicast/broadcast-related NGAP message. NGAP message exchange may be performed between the RAN and the LLOF through the non-service-based interface N2, and NGAP message exchange may be performed between the LLOF and the AMF through the service-based interface Nllof.

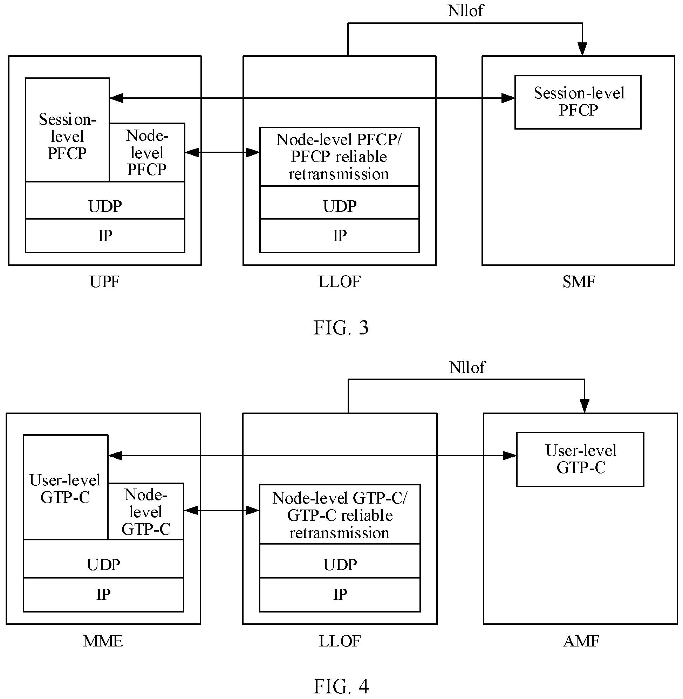

FIG. 3 is a diagram of protocol stacks of an N4 interface and an Nllof interface according to an embodiment of this application.

Refer to FIG. 3. There is message exchange based on an IP and a user datagram protocol (user datagram protocol, UDP) between a UPF and an LLOF, and there may be no message exchange based on the IP layer and the UDP layer between an SMF and the LLOF. Session-level packet forwarding control protocol (packet forwarding control protocol, PFCP) message exchange may be performed between the UPF and the SMF via the LLOF. A session-level PFCP message is used to control a user plane resource of a PDU session. For example, a PFCP session creation request is used to create the user plane resource corresponding to the PDU session. Session-level PFCP message exchange is performed between the UPF and the LLOF through the non-service-based interface N4 interface, and PFCP message exchange may be performed between the LLOF and the SMF through the service-based interface Nllof.

FIG. 4 is a diagram of protocol stacks of an N26 interface and an Nllof interface according to an embodiment of this application.

Refer to FIG. 4. There is message exchange based on an IP layer and a UDP layer between an MME and an LLOF, and there may be no message exchange based on the IP layer and the UDP layer between an AMF and the LLOF. User-level control plane protocol (GTP-C) message exchange may be performed between the MME and the AMF via the LLOF. A GTP-C message is used to manage movement of a UE between 4G and 5G. For example, a forward relocation request (forward relocation request) message is used to hand over the UE from 4G to 5G or from 5G to 4G. User-level GTP-C message exchange is performed between the MME and the LLOF through the non-service-based interface N26 interface, and user-level GTP-C message exchange may be performed between the LLOF and the AMF through the service-based interface Nllof.

It may be understood that the foregoing functions or network elements may be network elements in a hardware device, software functions running on dedicated hardware, or virtualized functions instantiated on a platform (for example, a cloud platform). In a future communication system, the foregoing functions, network elements, and interfaces may still use the foregoing names, or may have other names. This is not particularly limited in this application.

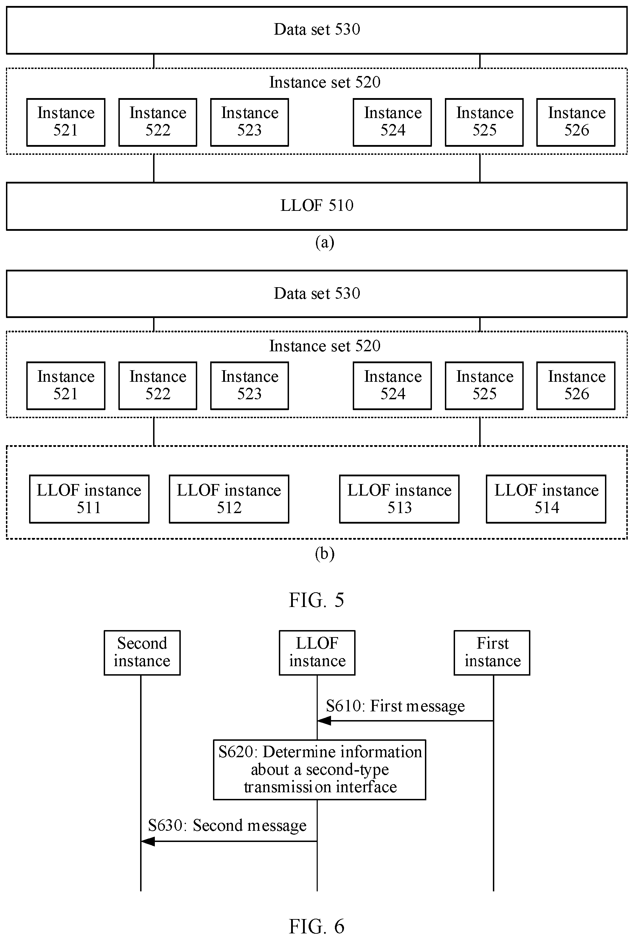

The foregoing describes the network architecture including the LLOF and the communication interface provided by the LLOF. The following further describes functions of the LLOF with reference to FIG. 5 to FIG. 8.

In a process of providing a service for one user equipment, message exchange needs to be performed between a plurality of network elements or functions. One network element or function may be one NF instance, or one network element or function may be divided into a plurality of service instances based on services. For example, the AMF may be considered as one AMF instance, or the AMF may be divided into a plurality of AMF service instances. The LLOF may also be divided into a plurality of LLOF instances. Communication interaction between the LLOF and an NF may be considered as communication interaction between an LLOF instance (or an LLOF service instance) and an NF instance (or an NF service instance). Details are not described below.

It should be noted that, similar to the descriptions of the foregoing functions or network elements, the LLOF instance supports interaction between a service-based interface (for example, an Nllof interface) and a service-based instance (for example, an AMF instance or an SMF instance), and the LLOF instance supports interaction between a non-service-based interface (for example, an N2 interface, an N4 interface, or an N26 interface) and a non-service-based instance (for example, a RAN instance or a UPF instance). In the following descriptions, interaction between instances is used for description. Details are not described below.

One instance set may include one or more instances, and the instances in one instance set may provide a same function. One LLOF may be responsible for message routing of one or more instance sets, and instances in different instance sets may provide a same function or may provide different functions.

FIG. 5 is a diagram of an instance deployment system according to an embodiment of this application.

Refer to (a) in FIG. 5. The system 500 includes an LLOF 510, an instance set 520, and a data set 530. The instance set 520 includes an instance 521 to an instance 526. The instances in the instance set 520 may provide a same function. For example, the instance 521 to the instance 526 are all AMF instances. Instances in a same instance set may share a context, to be specific, instances in a same instance set may store a context in a shared data set. For example, the instances in the instance set 520 may store a context in the shared data set 530. The LLOF may provide services for a plurality of data centers (data centers, DCs). For example, the instance 521 to the instance 523 are located in one DC, and the instance 524 to the instance 526 are located in another DC.

It should be noted that a quantity of instance sets served by the LLOF is not limited in this application. One LLOF may provide services for one or more instance sets. Instances in different instance sets may provide a same service, or may provide different services. For example, instances in two instance sets may be all AMF instances, or instances in two instance sets are respectively an SMF instance and an AMF instance. This is not particularly limited in this application.

In a possible implementation, the LLOF 510 may be understood as an LLOF instance set. Refer to (b) in FIG. 5. The LLOF instance set includes an LLOF instance 511 to an LLOF instance 514. In this case, the LLOF instance 511 to the LLOF instance 514 may share a context. For example, context information of the LLOF instances may also be stored in the data set 530. It should be noted that the context information of the LLOF instances and the context of the instances in the instance set 520 are different information. The LLOF instances and the instances in the instance set 520 do not share a context.

It should be noted that a quantity of LLOF sets included in the system is not limited in this application either. One system may include one or more LLOF sets, one LLOF set may include one or more LLOF instances, one LLOF instance may serve one or more instance sets, and one LLOF set may serve a plurality of DCs. For example, as shown in (b) in FIG. 5, one LLOF set serves two DCs, and each DC is served by two LLOF instances. LLOF instances in an LLOF set may be interconnected through an interface defined between LLOFs, for example, interconnected through an LLOF intra-domain interface. Two LLOF instances respectively in two LLOF sets may be interconnected through an external interface.

The foregoing describes, with reference to FIG. 1 to FIG. 5, a communication system to which embodiments of this application are applicable. It should be understood that an application scenario of embodiments of this application is not limited thereto, and any network architecture that can implement the foregoing network functions is applicable to embodiments of this application.

In some communication systems, there is a mutual access interface agreed on between a plurality of groups of two different instances, that is, a non-service-based interface. For example, an AMF instance communicates with a RAN instance through a non-service-based interface N2 interface, and an SMF instance communicates with a UPF instance through an N4 interface. There is a strong coupling relationship between two instances that establish a communication connection through a non-service-based interface, and communication needs to be performed based on a binding relationship between a physical interface and a UE context. This mechanism makes interaction flexibility between the plurality of groups of instances poor. For example, if one of the instances is faulty, a communication peer instance of the instance needs to sense the fault and perform a complex fault rectification procedure. Consequently, the system is not flexible enough and it is difficult to automatically recover in a fault scenario.

In addition, existence of non-service-based interfaces for service-based instances such as an AMF instance and an SMF instance leads to incomplete servitization of the AMF instance and the SMF instance. For example, on a non-service-based interface, there is a binding relationship between a user context and a physical interface, that is, an existing state. Consequently, there is a coupling relationship between an AMF instance and a RAN instance during AMF instance fault rectification and AMF instance scaling. This is not flexible enough, and an advantage of a service-based architecture cannot be fully utilized.

Therefore, this application provides a message transmission method and a communication apparatus, to improve flexibility of message transmission. The following first describes the message transmission method with reference to FIG. 6 to FIG. 11.

FIG. 6 is a schematic flowchart of a message transmission method according to an embodiment of this application.

S610: A first instance sends a first message to an LLOF instance, and correspondingly, the LLOF receives the first message from the first instance through a first-type interface.

The LLOF instance may be connected to a service-based instance through a service-based interface, and connected to a non-service-based instance through a non-service-based interface.

The first-type interface is the service-based interface, and a second-type interface is the non-service-based interface; or the first-type interface is the non-service-based interface, and a second-type interface is the service-based interface.

Optionally, if the non-service-based instance is a RAN instance, the service-based instance is an AMF instance. Correspondingly, a type of the non-service-based interface is an N2 interface, and a type of a corresponding message transmitted through the non-service-based interface is next generation application protocol NGAP. Alternatively, if the non-service-based instance is a UPF instance, the service-based instance is an SMF instance. Correspondingly, a type of the non-service-based interface is an N4 interface, and a type of a corresponding message transmitted through the non-service-based interface is packet forwarding control protocol PFCP. Alternatively, the non-service-based instance is an MME instance, and the service-based instance is an AMF instance. Correspondingly, a type of the non-service-based interface is an N26 interface, and a type of a corresponding message transmitted through the non-service-based interface is control plane protocol GTP-C.

The LLOF instance can be responsible for interaction between a RAN instance and an AMF instance, interaction between a UPF instance and an SMF instance, and interaction between an MME instance and an AMF instance. A type of a message transmitted through the non-service-based interface is any one of the following types: next generation application protocol NGAP, packet forwarding control protocol PFCP, or control plane protocol GTP-C. In this way, both the AMF and the SMF may not need to support the non-service-based interface, so that message exchange in a communication system is more flexible.

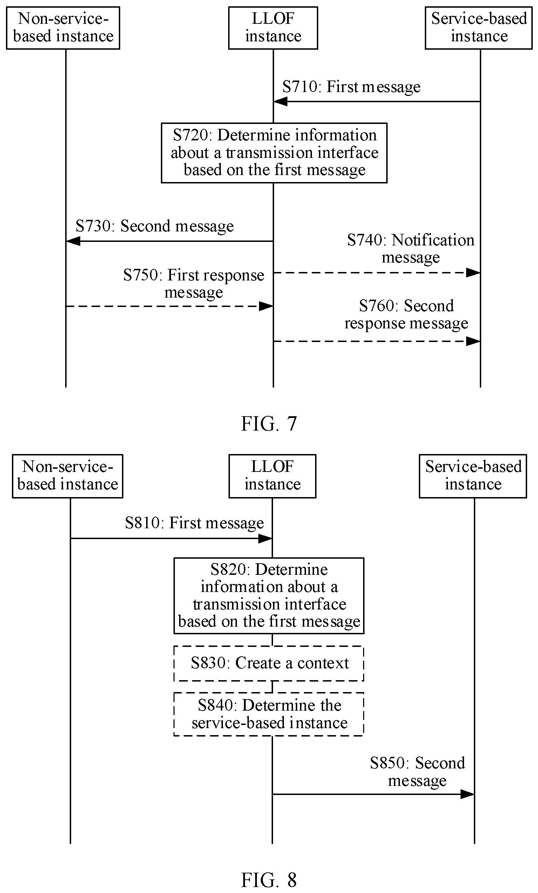

If the first instance is the service-based instance, and a second instance is the non-service-based instance, the first message may be a service-based message, and is used to request the LLOF to forward non-service-based parameter information to a non-service-based network element for the service-based instance. If the first instance is the non-service-based instance, and a second instance is the service-based instance, the first message may be a non-service-based message. The non-service-based message is a message encapsulated in a format defined by the non-service-based interface, for example, a UE-level or service-level NGAP message transmitted between the RAN and the AMF, a GTP-C message transmitted between the MME and the AMF, or a session-level PFCP message transmitted between the UPF and the SMF. For ease of understanding, more detailed descriptions are provided below with reference to FIG. 7 and FIG. 8. In FIG. 7, a first instance is a service-based instance, and a second instance is a non-service-based instance. In FIG. 8, a first instance is a non-service-based instance, and a second instance is a service-based instance. Details are not described herein.

Optionally, a link load orchestration function instance supports a plurality of types of non-service-based interfaces, and is connected to a plurality of types of non-service-based instances through a plurality of types of non-service-based interfaces.

One LLOF instance may support a plurality of types of non-service-based interfaces. For example, one LLOF instance may support non-service-based interfaces such as an N2 interface, an N4 interface, and an N26 interface. In this way, a quantity of instances that need to support a non-service-based interface in the communication system can be reduced, and flexibility of message transmission in the communication system can be further improved.

S620: The LLOF instance determines information about the second-type transmission interface based on the first message.

If the second-type interface is the non-service-based interface, the information about the transmission interface includes at least one of the following information: IP address information of the non-service-based instance and a port number of the non-service-based instance. For details, refer to the descriptions in FIG. 7. Details are not described herein.

If the second-type interface is the service-based interface, the information about the transmission interface includes a notification address of the service-based instance. For details, refer to the descriptions in FIG. 8. Details are not described herein.

In a possible implementation, that the LLOF instance determines the information about the transmission interface based on the first message includes: determining a context of a terminal device based on the first message, and determining the information about the transmission interface based on the context of the terminal device.

For example, the LLOF instance may store the context of the terminal device, and store the information about the transmission interface in the context of the terminal device. In other words, the context of the terminal device may not be maintained in the first instance and the second instance. This can reduce processing burden of the first instance and the second instance. Alternatively, the information about the transmission interface may not be stored in the context of the terminal device, but information about the second instance or set information of the second instance is stored in the context of the terminal device. The LLOF determines the information about the transmission interface based on the information about the second instance or the set information of the second instance. For example, the context of the terminal device includes an identifier of the second instance, and the LLOF instance may obtain, through indexing, the information about the transmission interface based on the identifier of the second instance, to be specific, the information about the transmission interface between the second instance and the LLOF instance. For details, refer to the descriptions in FIG. 8.

It should be noted that, in a possible implementation, if the LLOF instance determines that the second instance is faulty or a capacity of an instance set including the second instance changes (for example, a new service instance is added), a third instance may be determined based on the context of the terminal device. The context of the terminal device includes information about the instance set. The instance set includes the second instance and the third instance, and sends, based on the first message, a third message to the third instance through the second-type interface.

Optionally, when learning that the second instance is faulty, or learning that the capacity of the instance set changes, the LLOF instance may determine to reselect a third instance, and may delete the information about the second instance in the context of the terminal device.

According to this technical solution, the LLOF instance can dynamically replace the service-based instance serving the terminal device, to implement redundancy and dynamic scaling of the communication system.

S630: The LLOF instance sends a second message to the second instance through the second-type interface, and correspondingly, the second instance receives the second message from the LLOF instance.

The LLOF instance may generate the second message based on the first message and the information about the transmission interface. A payload part of the second message may be the same as or may not be different from a payload part of the first message.

For example, the LLOF instance may not process the payload part (namely, parameter information) of the first message, and encapsulate the payload part of the first message based on the information about the second-type transmission interface, to generate the second message. Alternatively, the LLOF instance may encode or decode the payload part of the first message, so that the service-based instance receives or sends decoded parameter information. In other words, the service-based instance may not need to encode the parameter information based on a message format of the non-service-based interface. That is, the service-based instance directly sends the parameter information to the LLOF instance, and the LLOF instance encodes the parameter information based on the message format of the non-service-based interface. Correspondingly, the LLOF instance may decode a binary bit stream of the parameter information obtained from the non-service-based interface, and send the decoded parameter information to the service-based instance, so that a processing amount of the service-based instance can be reduced. For a specific implementation, refer to the following descriptions in FIG. 7 and FIG. 8. Details are not described herein.

According to this technical solution, the LLOF instance may have information about transmission interfaces of a plurality of types of interfaces, for example, information about a transmission interface of the service-based type and information about a transmission interface of the non-service-based type. In addition, the LLOF instance may have a capability of converting a message received from the service-based interface into a message sent by the non-service-based interface, and a capability of converting a message received from the non-service-based interface into a message sent by the service-based interface. Therefore, in a communication system including the LLOF instance, when two instances having different types of interfaces need to communicate with each other, the instances may no longer need to support both the service-based interface and the non-service-based interface. In addition, when a communication connection between the LLOF instance and one of the instances needs to change, a communication connection between the LLOF instance and the other instance may not need to be re-established. This improves flexibility of message transmission in the communication system.

As described above, the LLOF instance may have the capability of converting a message received from the service-based interface into a message sent by the non-service-based interface, and the capability of converting a message received from the non-service-based interface into a message sent by the service-based interface. The following provides descriptions with reference to FIG. 7 and FIG. 8. FIG. 7 is described by using an example in which an LLOF instance converts a message received from a service-based interface into a message sent by a non-service-based interface. FIG. 8 is described by using an example in which an LLOF instance converts a message received from a non-service-based interface into a message sent by a service-based interface.

FIG. 7 is a schematic flowchart of an example of a message transmission method according to an embodiment of this application.

S710: A service-based instance sends a first message to an LLOF instance, and correspondingly, the LLOF instance receives the first message from the service-based instance.

The LLOF receives the first message through a service-based interface.

The first message may include parameter information sent to a non-service-based instance, to be specific, a parameter used to be encapsulated into a non-service-based message. The non-service-based message is a message transmitted on a non-service-based interface, for example, a UE-level or service-level NGAP message transmitted between a RAN instance and an AMF instance, a GTP-C message transmitted between an MME and an AMF instance, or a session-level PFCP message transmitted between a UPF and an SMF.

The service-based instance may be a control plane network element, for example, the AMF instance or the SMF instance. The non-service-based instance may be a non-service-based network element, such as the RAN instance, the UPF, or the MME. The LLOF instance may receive a request message from the service-based instance through the service-based interface (for example, the interface Nllof in FIG. 1), and subsequently send a non-service-based parameter to the non-service-based instance through the non-service-based interface (for example, the interface N2, the interface N4, or the interface N26 shown in FIG. 1 to FIG. 4).

In a possible implementation, the first message is used to request the LLOF instance to send the parameter information in the first message.

For example, the LLOF instance provides a service, where the service is used to convert a message received from the service-based interface into a message sent by the non-service-based interface, and send the message through non-service-based interface. When the service-based instance needs to send the parameter information to the non-service-based instance, the service-based instance may invoke the service, and send the parameter information that needs to be sent to the LLOF instance through the service-based interface, that is, include the parameter information that needs to be sent in the first message and send the first message to the LLOF instance. For example, an Nllof_message_transfer service may be defined. When the service-based instance invokes the Nllof_message_transfer service, in other words, sends the first message, the LLOF instance may send, in response to a request of the service, a second message including the parameter information to the non-service-based instance. Therefore, the LLOF instance includes, in the second message, the parameter information that is in the first message and that is to be transferred by the service-based instance to the non-service-based instance, and sends the second message to the non-service-based instance through the non-service-based interface. In this way, the service-based instance may not need to support the non-service-based interface, but send the message to the non-service-based instance via the LLOF. This can improve flexibility of message transmission in a communication system.

In a possible implementation, the first message includes type information, and the type information indicates a second type.

For example, the type information indicates that a message sent through the non-service-based interface is any one of an NGAP message, the GTP-C message, or the PFCP message, and/or indicates that a type of the non-service-based interface is any one of the N2 interface, the N4 interface, or the N26 interface, so that the LLOF instance can determine a format of the non-service-based message and/or the type of the non-service-based interface based on the type information.

In another possible implementation, a message type of the first message (or a service type corresponding to the first message) is associated with a type of a service-based message.

For example, the LLOF instance may define different services for different types of non-service-based messages. For example, an Nllof_NGAPmessage_transfer service is defined to transmit the NGAP message, Nllof_GTPCMessage_Transfer is defined to transmit the GTP-C message, and Nllof_PFCPMessage_Transfer is defined to transmit the PFCP message. Therefore, the first message may not need to include the foregoing type information, and the LLOF may learn of a type of the non-service-based message based on the message type of the first message (or the service type corresponding to the first message).

In a possible manner, the first message includes a context identifier of a terminal device. A context of the terminal device is a context of the terminal device stored in the LLOF instance (or an LLOF instance set). The context identifier of the terminal device is used to uniquely identify the context of the terminal device in the LLOF instance (or in the LLOF instance set).

The service-based instance may include the context identifier of the terminal device in the first message. Further, the LLOF instance may obtain the context of the terminal device based on the context identifier, and then obtain information about a transmission interface that corresponds to the non-service-based interface and that is in the context of the terminal device. A message is sent to the non-service-based instance based on the information about the transmission interface, so that the service-based instance does not need to support sending the message to the non-service-based instance through the non-service-based interface. This can improve flexibility of message transmission. The context of the terminal device may further include interface information of an interface between the LLOF instance and the non-service instance. For example, the LLOF instance.

In a possible manner, the first message includes a notification address. The notification address may include an IP address of the service-based instance, a port number of the service-based instance, or the context identifier of the terminal device in the service-based instance.

In other words, the service-based instance may include the notification address of the service-based instance in the first message. Further, the LLOF instance may return, to the service-based instance based on the notification address, information indicating whether the second message is successfully sent, or send corresponding parameter information to the service-based instance based on a response message of the second message.

In a possible manner, the first message may further include a discovery parameter, and the discovery parameter may be used to determine the non-service-based instance. For example, when the non-service-based instance is the RAN, the discovery parameter may be a target RAN identifier. When the non-service-based instance is the UPF, the discovery parameter may include a DNN, S-NSSAI, and the like. When the non-service-based instance is the MME, the discovery parameter may include a TAI and the like. This is not particularly limited in this application. Therefore, the LLOF instance may determine, based on the discovery parameter, the non-service-based instance for the first message, and further determine information about a transmission interface configured to send the second message.

S720: The LLOF instance determines information about a non-service-based type transmission interface based on the first message.

The information about the transmission interface of the non-service-based type includes at least one of the following information: IP address information of the non-service-based instance and a port number of the non-service-based instance. The information about the transmission interface of the non-service-based type may further include IP address information of the LLOF and the non-service-based interface and port numbers of the LLOF and the non-service-based interface.

The LLOF may obtain the context of the terminal device based on the context identifier of the terminal device in the first message, and obtain the information about the transmission interface of the non-service-based type from the context of the terminal device.

For example, the LLOF instance stores the context of the terminal device, or a context of a session (for example, a PDU session) of the terminal device. The context includes information about a transmission interface used to transmit a non-service-based message related to the terminal device.

For example, the context may include transport network layer (transport network layer, TNL) information corresponding to the NGAP message, and the TNL information can be used to determine address information required for a non-service-based message of an NGAP type. The TNL information may include at least one of the following information: N2 IP address information of the RAN instance and port number information of the RAN instance. In addition, the TNL information may further include at least one of N2 IP address information of the AMF instance or port number information of the AMF instance. The N2 IP address information of the AMF instance or the port number information of the AMF instance may be IP address and/or port number information that is on the LLOF instance and that corresponds to a set including the AMF. In other words, the LLOF instance allocates an IP address and/or a port number corresponding to the N2 interface to the AMF instance set.

For another example, the context may include address information corresponding to the GTP-C message, for example, IP address information of the MME and a UDP port number corresponding to the GTP-C of the MME. In addition, the context may further include at least one of IP address information corresponding to GTP-C of the AMF instance or UDP port number information corresponding to GTP-C of the AMF instance. The IP address information corresponding to the GTP-C of the AMF instance or the UDP port number information corresponding to the GTP-C of the AMF instance is IP address and/or port number information that is on the LLOF instance and that corresponds to the AMF instance set. In other words, the LLOF instance allocates a GTP-C IP address and/or port number to the AMF instance set.

For example, the IP address information corresponding to the GTP-C of the AMF instance and the IP address information corresponding to the N2 interface may be a same IP address, or may be different IP addresses. This is not limited in this embodiment.

For another example, the context may include address information corresponding to the PFCP message, for example, IP address information of the UPF and UDP port number information corresponding to the PFCP of the MME. In addition, the context may further include at least one of IP address information corresponding to PFCP of the SMF or UDP port number information corresponding to PFCP of the SMF. The IP address information corresponding to the PFCP of the SMF or the UDP port number information corresponding to the PFCP of the SMF is IP address and/or port number information that is on the LLOF instance and that corresponds to an SMF instance set. In other words, the LLOF instance allocates a PFCP address and/or port number to the SMF instance set.

It may be understood that the context identifier may be allocated by the LLOF instance to the terminal device or the session of the terminal device. The LLOF instance may send the allocated context identifier to the service-based instance, so that when sending the first message, the service-based instance can include the context identifier in the first message.

In a possible implementation, the first message includes a binary bit stream of the non-service-based message. In other words, the service-based instance may perform encoding according to a protocol corresponding to the message type of the non-service-based message, and send a binary bit stream of an encoded message to the LLOF instance. The LLOF instance may no longer need to encode the message.

It should be noted that the service-based instance performs message encoding according to the protocol corresponding to the message type of the non-service-based message, and sends the binary bit stream of the encoded message to the LLOF instance. In this case, the binary bit stream of the non-service-based message may not include transport layer and IP layer information. For example, when the non-service-based message is the NGAP message, the binary bit stream of the non-service-based message may not include an IP header or an SCTP header; when the non-service-based message is the GTP-C message, the binary bit stream of the non-service-based message may not include an IP header or a UDP header; or when the non-service-based message is the PFCP message, the binary bit stream of the non-service-based message may not include an IP header or a UDP header. This is because the LLOF instance may obtain the information about the transmission interface of the non-service-based interface based on the context identifier of the terminal device. In this way, the first message may not need to carry address header information, so that a specific transmission resource can be saved.

For example, if the message type of the non-service-based message is NGAP, the non-service-based message may be encapsulated based on a format of the NGAP. For example, a binary bit stream of the non-service-based message is encapsulated into a payload part of SCTP, a corresponding IP header or SCTP header is generated, and the non-service-based message is sent to a corresponding RAN instance through the N2 interface.

For another example, if the message type of the non-service-based message is PFCP, the non-service-based message may be encapsulated based on a format of the PFCP. For example, a binary bit stream of the service-based message is encapsulated into a payload part of a UDP, a corresponding IP header or UDP header is generated, and the non-service-based message is sent to a corresponding UPF through the N4 interface.

For still another example, if the message type of the non-service-based message is the GTP-C, the non-service-based message may be encapsulated based on a format of the GTP-C. For example, a binary bit stream of the service-based message is encapsulated into a payload part of a UDP, a corresponding IP header or UDP header is generated, and the non-service-based message is sent to a corresponding MME through the N26 interface.

In another possible implementation, the LLOF instance performs encoding processing on the parameter information in the first message, where the second message includes a binary bit stream of encoding-processed parameter information.

The service-based instance may directly send the parameter information to the LLOF instance. To be specific, the service-based instance may directly send the parameter information to the LLOF instance without performing non-service-based message encoding processing on the parameter information, and the LLOF instance performs encoding processing and sends encoded parameter information to the non-service-based instance. This can reduce processing burden of the service-based instance. The LLOF instance encapsulates the binary bit stream of the encoded parameter information based on the type of the non-service-based interface. An encapsulation manner is similar to that described above. Details are not described herein again.

Optionally, if the first message further includes a selection parameter, the LLOF instance may further select, based on the selection parameter, a non-service-based instance for processing the first message.

For example, there is no information about a transmission interface of a target non-service-based instance in the context of the terminal device in the LLOF instance. The LLOF instance selects a target non-service-based network element based on the selection parameter, and determines information about a transmission interface based on the selected target non-service-based network element. For example, the LLOF pre-stores IP address information and/or port number information of the non-service-based network element. The LLOF may further determine an interface address and/or a port number of the service-based instance, that is, an interface address and/or a port number of an interface between the LLOF and the non-service-based instance. The LLOF instance processes the non-service-based message based on the interface information of the selected target non-service-based instance and interface address/port number information that is of the service-based instance and that is determined by the LLOF instance.

S730: The LLOF instance sends the second message to the non-service-based instance, and correspondingly, the non-service-based instance receives the second message from the LLOF instance.

The LLOF instance sends the second message to the non-service-based instance through the non-service-based interface. The second message may be the non-service-based message, for example, the NGAP message, the PFCP message, or the GTP-C message.

Optionally, if the first message further includes the notification address, the LLOF instance may further return, to the service-based instance based on the notification address, the information indicating whether the second message is successfully sent, so that the service-based instance can learn, based on feedback of the LLOF instance, whether the message is successfully sent. This can improve message transmission reliability. Alternatively, the LLOF instance may send, to the service-based instance based on the notification address, a response message returned by the non-service-based instance, to be specific, send parameter information in the response message to the service-based instance. Similar to the sending of the second message, after receiving the response message from the non-service-based instance, the LLOF may send a binary bit stream of the parameter information in the response message to the service-based instance by using the notification address, or the LLOF decodes binary parameter information and sends decoded parameter information to the service-based instance by using the notification address. The service-based instance can obtain the feedback of the non-service-based instance, and can determine whether message transmission is successful depending on whether the response message is received. This can also improve message transmission reliability. The following provides descriptions with reference to optional steps S740 and S760.

Optionally, in S740, the LLOF instance sends a notification message to the service-based instance, and correspondingly, the service-based instance receives the notification message from the LLOF instance.

The notification message includes at least one of the following information: result information and reason information, where the result information indicates whether the second message is successfully sent, and the reason information indicates a reason why the second message fails to be sent. The notification message may be an Nllof_Message_Notify message of a service-based type.

For example, if the LLOF instance fails to send the second message, the LLOF instance may send, to the service-based instance, a notification message that includes information indicating that the second message fails to be sent. Optionally, the LLOF instance may further include, in the notification message, reason information indicating a failure reason. For example, the LLOF fails to send the message because information about a transmission interface of a corresponding non-service-based type is not found; for another example, the LLOF fails to send the message because the context of the terminal device corresponding to the context identifier is not found; and the like. This is not particularly limited in this application.

Optionally, in S750, the non-service-based instance sends a first response message to the LLOF instance, and correspondingly, the LLOF instance receives the first response message from the non-service-based instance.

The non-service-based instance may send the first response message in response to the second message. The first response message may include content of replying to the second message, or may be used to notify that the second message is successfully received. This is not particularly limited in this application.

It should be noted that the first response message may include routing identification information, and the LLOF instance may send, based on the routing identification information, content of the first response message to the service-based instance by using the notification address. For more detailed descriptions of this implementation, refer to the descriptions in FIG. 8. Different from that in FIG. 8, the notification address used herein may be the notification address carried in the first message. Details are not described herein.

Optionally, in S760, the LLOF instance sends a second response message to the service-based instance, and correspondingly, the service-based instance receives the second response message from the LLOF instance.

The LLOF instance may send the second response message to the service-based instance based on the notification address of the service-based instance in the first message. The LLOF instance may decode the first response message to generate the second response message. For another example, the LLOF instance may directly encapsulate a binary bit stream in the first response message to generate the second response message. For more detailed descriptions, refer to the descriptions of processing the first message (non-service-based message) and sending a processed first message to the service-based instance in FIG. 8. Details are not described herein.

It may be understood that the LLOF instance may alternatively send the second response message to the service-based instance based on the routing identification information in the first response message. For more detailed descriptions, refer to the descriptions of processing the first message (non-service-based message) and sending the processed first message to the service-based instance in FIG. 8. Details are not described herein.

According to the foregoing technical solutions, the LOF instance may have a capability of converting the message received from the service-based interface into the message sent by the non-service-based interface, so that the service-based instance does not need to support sending a message to the non-service-based instance through the non-service-based interface. This can improve flexibility of message transmission.

FIG. 8 is a schematic flowchart of another example of a message transmission method according to an embodiment of this application.

S810: A non-service-based instance sends a first message to an LLOF instance, and correspondingly, the LLOF instance receives the first message from the non-service-based instance.

The first message may be a non-service-based message, for example, a UE-level or service-level NGAP message transmitted between a RAN and an AMF, a GTP-C message transmitted between an MME and an AMF, or a session-level PFCP message transmitted between a UPF and an SMF.

In a possible implementation, the first message includes routing identification information, the routing identification information is used by the LLOF instance to determine a context of a terminal device, and the context of the terminal device includes the routing identification information, information about a service-based instance, and/or set information of the service-based instance. Therefore, the LLOF instance finds the context of the terminal device based on the routing identification information in the first message, and obtains the information about the service-based instance, to determine a notification address of the service-based instance based on the information about the service-based instance. Alternatively, the LLOF instance obtains the set information of the service-based instance, and selects the service-based instance from the set, to determine a notification address of the service-based instance. The LLOF instance sends a message to the service-based instance based on the notification address. In this way, the non-service-based instance can transmit the message to the service-based instance without sensing an address of the service-based instance.

Optionally, the routing identification information may further include at least one of the following information: source IP address information of the first message, destination IP address information of the first message, a source port number of the first message, or a destination port number of the first message.

For example, when the non-service-based message is of an NGAP type, the routing identification information may include an AMF NGAP UE ID identifier, and may further include information about a TNL corresponding to the first message (to be specific, one or more of the source/destination IP address of the first message and the source/destination port number of the first message). For another example, when the non-service-based message is of a GTP-C type, the routing identification information may include a GTP-C TEID identifier, and may further include one or more of the source/destination IP address of the first message and the source/destination port number of the first message. For still another example, when the non-service-based message is of a PFCP type, the routing identification information may include an SEID, and may further include one or more of the source/destination IP address of the first message and the source/destination port number of the first message.

S820: The LLOF instance determines information about a service-based type transmission interface based on the first message.

The information about the transmission interface may include the notification address of the service-based instance. The LLOF instance may store the information about the transmission interface including the notification address of the service-based instance, and the LLOF instance may send, to the service-based instance based on the notification address, information sent by the non-service-based instance.

For example, the notification address may include information such as an IP address of the service-based instance and a port number of the service-based instance, so that the LLOF instance can send a message to the service-based instance based on the notification address. Notification address information may further include information about a context identifier. The information about the context identifier is used to identify the context of the terminal device in the service-based instance. In this way, after receiving the notification message, the service-based instance may directly determine the context of the terminal device in the service-based instance based on the context identifier in the notification address information.

In a possible implementation, the LLOF instance determines the notification address of the service-based instance based on the IP address of the service-based instance or an FQDN of the service-based instance. For example, the notification address is a URI, and the LLOF instance may determine the notification address based on a preset format. For example, the preset format may be https://{apiroot}/nllof_messagetransfer_notify/<apiVersion>/nsbi-messages, where an apiroot field includes an IP address of the AMF or an FQDN of the AMF. For a manner of determining the service-based instance by the LLOF instance, refer to the descriptions in step S810.

In a possible implementation, the context of the terminal device includes the notification address information. For example, the first message is a response message of the non-service-based message, namely, a response message of the second message in the embodiment in FIG. 7.

Optionally, if the LLOF instance does not find the context of the terminal device based on the first message, the LLOF instance may create a context of the terminal device. The following provides descriptions with reference to step S830.

Optionally, in S830, the LLOF instance creates the context of the terminal device based on the first message.

If the LLOF instance does not have the context of the terminal device, the LLOF instance may create the context of the terminal device, and the LLOF instance may store the information about the transmission interface in the context of the terminal. The information about the transmission interface may include the source IP address of the first message, and may further include one or more of the destination IP address of the first message, the source port number of the first message, and the destination port number of the first message. The LLOF instance may allocate the context identifier of the terminal device, and include the context identifier in a second message and send the second message to the service-based instance. In this way, the service-based instance may subsequently perform communication based on the context identifier.

For example, the LLOF instance allocates the context identifier to the context of the terminal device, and stores the context identifier in the context of the terminal device. The context of the terminal device includes the context identifier, a corresponding service-based instance identifier and/or service-based instance set identifier, and the information about the transmission interface. If the first message further includes the routing identification information, the LLOF instance further stores the routing identification information in the context of the terminal device.

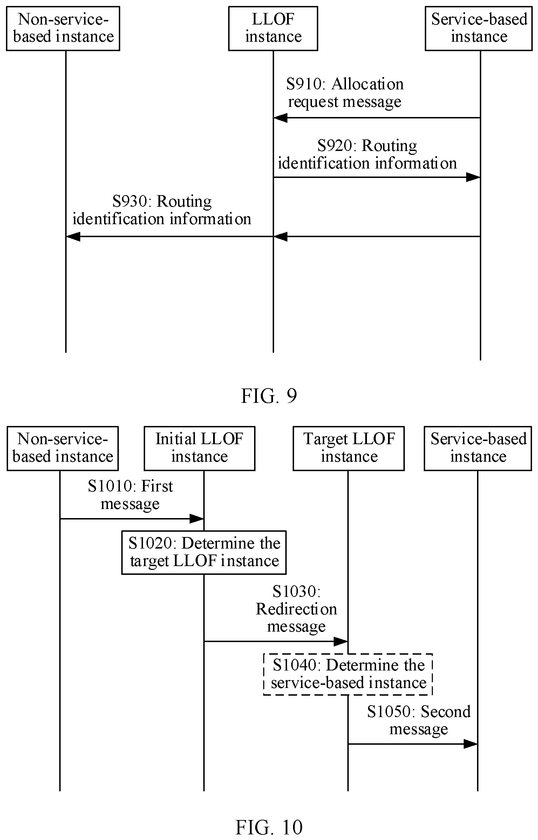

It may be understood that, in some scenarios, for example, in initial registration of a UE, the first message may not include the routing identification information. In this case, the LLOF may obtain the routing identification information based on a routing identifier allocation procedure. For more detailed descriptions, refer to descriptions in FIG. 9. Details are not described herein.

Optionally, if there is no determined service-based instance in the context of the terminal device, the LLOF instance may select a service-based instance based on the first message, and send the second message to the selected service-based instance. The following provides descriptions with reference to step S840.

Optionally, in S840, the LLOF instance determines the service-based instance.

The LLOF instance may obtain information about an instance set. For example, the context of the terminal device may include the information about the instance set. The instance set may include at least one instance, and the at least one instance may provide a same function. The LLOF instance may select one instance from the instance set as the service-based instance, that is, a target instance, based on the first message.

In a possible implementation, the first message does not include a routing identifier. For example, the first message does not include the AMF NGAP UE ID, the first message does not include a target GTP-C TEID identifier, or the first message does not include target SEID information. Alternatively, the LLOF cannot find the context of the terminal device based on a routing identifier. In this case, the LLOF instance determines a service-based instance set based on the destination IP address of the first message, and selects one instance from the service-based instance set as the service-based instance, that is, the target instance. The LLOF instance may allocate an IP address corresponding to a non-service-based interface to the service-based instance set. In this way, the LLOF instance may determine, based on the IP address of the first message, a service-based instance set corresponding to the first message. For example, the LLOF instance may allocate, to an AMF set, an N2 IP address corresponding to the set, the LLOF instance may allocate, to an AMF set, a GTP-C IP address corresponding to the set, or the LLOF instance may allocate, to an SMF set, an N4 IP address corresponding to the set. When receiving the non-service-based message, the LLOF instance may determine the service-based instance set based on a destination IP address of the message. The IP address herein may be considered as information about the instance set.

For example, the LLOF instance may determine a type of the target instance based on a type of the non-service-based message. For example, the LLOF instance may determine, based on the non-service-based type, whether to forward the non-service-based message to an AMF-type instance or an SMF-type instance.

For example, if the type of the non-service-based message is UE-level NGAP or service-level NGAP, the LLOF determines that a first instance is an AMF instance. For another example, if the type of the non-service-based message is a UE-level GTP-C type, the LLOF determines that a first instance is an AMF instance. For still another example, if the type of the non-service-based message is a UE-level PFCP type, the LLOF instance determines that a first instance is an SMF instance.

For example, the non-service-based message includes the routing identification information. The LLOF instance may query for the context of the terminal device based on the routing identification information. If there is a context of the terminal device corresponding to the routing identification information, the LLOF instance may query for identification information of the target instance based on the context of the terminal device. If there is the identification information of the target instance in the context of the terminal device, the LLOF instance determines that the target instance is the first instance that receives the non-service-based message. If there is no identification information of the target instance in the context of the terminal device, the LLOF instance may query whether there is an identifier of the instance set in the context of terminal device, for example, an identifier of an instance set including the AMF or the SMF. If there is the identifier of the instance set, the LLOF instance may select the target instance from the instance set as the first instance that receives the non-service-based message. If the context of the terminal device does not include an identifier of the target instance and an identifier of the instance set, or the LLOF instance does not find the context of the terminal device that corresponds to the routing identification information in the non-service-based message, or the non-service-based message does not include the routing identification information, the LLOF instance may determine the instance set based on address information in the non-service-based message, for example, a destination address and/or port number, and select the target instance from the instance set as the service-based instance that receives the second message.

For another example, the non-service-based message includes address information, and the address information may be used to determine an instance set to which the service-based instance belongs. For example, the address information includes a destination address (for example, an IP address) and/or port number of the non-service-based message, and the LLOF instance may determine the instance set to which the service-based instance belongs based on the destination address and/or port number. In a possible implementation, the address information is allocated by the LLOF instance. For example, the LLOF instance may configure different IP addresses and/or port numbers for different instance sets, so that the LLOF instance can determine, based on an IP address and/or a port number, an instance set to which a receiver of the non-service-based message belongs.

S850: The LLOF instance sends the second message to the service-based instance, and correspondingly, the service-based instance receives the second message from the LLOF instance.

The LLOF instance may generate the second message based on the first message and the information about the transmission interface.

In a possible implementation, the LLOF instance decodes a binary bit stream of parameter information in the first message, where the second message includes decoding-processed parameter information. In this way, the service-based instance receives the decoded parameter information that can be interpreted. This can reduce operating burden of the service-based instance. Alternatively, the LLOF does not decode parameter information in the first message, and directly includes a binary bit stream of the parameter information in the second message. In this way, the LLOF instance does not need to understand specific message content. This simplifies logic of the LLOF instance.

Optionally, the second message may carry a type indication, where the type indication indicates a type of a non-service-based interface protocol corresponding to the parameter information. For example, the type indication may indicate that the parameter information is a parameter of an NGAP message, a parameter of a GTP-C message, or a parameter of a PFCP message. For example, the second message may be an Nllof_message_Notify service, and the LLOF may invoke the service to send parameter information of all types of non-service-based messages. Alternatively, the LLOF invokes different services to send parameter information of different non-service-based messages. For example, Nllof_NGAPmessage_Notify is defined to transmit the parameter of the NGAP message, Nllof_GTPCMessage_Notify is defined to transmit the parameter of the GTP-C message, and Nllof_PFCPMessage_Notify is defined to transmit the parameter of the PFCP message. In this implementation, different services, namely, different message types, are used to distinguish between different non-service-based message types.

In a possible implementation, the second message may further include information about a context identifier of the terminal device. The information about the context identifier of the terminal device indicates the context of the terminal device in the LLOF instance. The context identifier may be used for subsequent communication between the service-based instance and the LLOF instance, for example, is used to request the LLOF to send a non-service-based message related to the terminal device to the non-service-based instance. The context identifier of the terminal device may be allocated by the LLOF instance to the terminal device.

According to this technical solution, the LLOF instance may have a capability of converting a message received from the service-based interface into a message sent by the non-service-based interface. The service-based instance may obtain information sent by the non-service-based message without supporting the non-service-based interface. This can improve flexibility of message transmission in a communication system.

In the descriptions of the foregoing embodiments, the message sent by the non-service-based instance may include the routing identification information, so that the LLOF instance can determine the information about the transmission interface based on the routing identification information, and then send the message to the service-based instance. However, in some scenarios, for example, in initial registration of the UE, the first message may not include the routing identification information. In this case, the LLOF may obtain the routing identification information based on the routing identifier allocation procedure. The following provides descriptions with reference to FIG. 9.

FIG. 9 is a schematic flowchart of a routing identifier allocation method according to an embodiment of this application.

S910: A service-based instance sends an allocation request message to an LLOF instance, and correspondingly, the LLOF instance receives the allocation request message from the service-based instance.

The allocation request message is used to request the LLOF instance to allocate a routing identifier. For example, the allocation request message may be an Nllof_RoutingId Alloc Request.

The service-based instance receives parameter information sent by a non-service-based instance, for example, parameter information transmitted during initial registration of a UE. The service-based instance may determine, based on the parameter information, to provide a service for the UE. If the message does not include routing identification information, it may be considered that no routing identifier is allocated to a non-service-based interface. In this case, the service-based instance may actively request the LLOF instance to allocate a routing identifier for subsequent message transmission.

For example, a non-service-based message of an NGAP type transmitted through an N2 interface is used as an example. The allocation request message may be used to request the LLOF to allocate an AMF NGAP UE ID. The AMF NGAP UE ID may be used as the routing identifier, to subsequently route the non-service-based message.

In a possible implementation, the allocation request message may further include a context identifier of a terminal device in the LLOF instance. The LLOF may associate the allocation request message with a corresponding context of the terminal device, and store allocated routing identification information in the context of the terminal device. Subsequently, the LLOF instance may obtain the routing identification information based on the context identifier of the terminal device, and transfer a message for the service-based instance and the non-service-based instance based on the routing identification information, for example, the procedure described in FIG. 8.

S920: The LLOF instance sends the routing identification information to the service-based instance, and correspondingly, the service-based instance receives the routing identification information from the LLOF instance.

S930: The service-based instance sends the routing identification information to the non-service-based instance via the LLOF instance.

The LLOF instance may receive the routing identification information from the service-based instance through a service-based interface, and then send the routing identification information to the non-service-based instance through the non-service-based interface. Specifically, the routing identification information is included in parameter information of the non-service-based message in the first message. The first message may be a request message sent by the service-based instance to the non-service-based instance, or may be a response message in response to a request message sent by the non-service-based instance.

According to the foregoing solution, the LLOF instance may receive a request of the service-based instance, and allocate routing identification information used for information transmission between the service-based instance and the non-service-based instance. Subsequently, the non-service-based instance may use the routing identification information to communicate with the service-based instance. This can improve flexibility of message transmission in a communication system.

In some scenarios, an interface between the LLOF instance and the non-service-based instance may be faulty. In this case, when the non-service-based instance needs to send a message to the service-based instance, the non-service-based instance reselects an LLOF instance. If the LLOF instance selected by the non-service-based instance and the service-based instance serving the terminal device are not in a same DC, after receiving the non-service-based message, the LLOF instance may forward the non-service-based message to an LLOF instance that is in the same DC as the service-based instance, so that the LLOF instance in the same DC sends parameter information of the non-service-based message to the service-based instance. In this way, a response message may be sent via the LLOF instance in the same DC, to avoid that the non-service-based message needs to be subsequently forwarded across DCs. The following describes, with reference to FIG. 10, that an LLOF instance may request another LLOF instance to select an instance for a terminal device.

FIG. 10 is a schematic flowchart of a message transmission method via a plurality of LLOF instances according to an embodiment of this application.

S1010: A non-service-based instance sends a first message to an initial LLOF instance, and correspondingly, the initial LLOF instance receives the first message from the non-service-based instance.

The first message is a non-service-based message.

The non-service-based message may be a UE-level or service-level NGAP message transmitted between a RAN and an AMF, a GTP-C message transmitted between an MME and an AMF, or a session-level PFCP message transmitted between a UPF and an SMF.

The non-service-based message may include routing identification information. The descriptions of step S1010 refer to the descriptions of the first message in step S810. Details are not described herein again.

It should be noted that each LLOF instance supports one or more external interfaces. For example, refer to (b) in FIG. 5. One LLOF domain includes at least two DCs, and each DC includes two LLOF instances. LLOF domains are interconnected through an external interface of the LLOF instance. In an LLOF domain, LLOF instances may be interconnected through an interface between LLOFs. Message forwarding across LLOF instances may be performed between LLOF instances through the foregoing interface. For example, if an LLOF instance in a DC#1 receives a message sent to an NF instance in a DC#2, the LLOF instance may send the message to an LLOF instance in the DC#2 through an interface between LLOF instances, so that the LLOF instance in the DC#2 sends the message to the NF instance in the DC#2.

Each service-based instance may be configured with information about an LLOF instance that is in a current LLOF domain and that provides a service for the service-based instance. For example, the service-based instance configures an LLOF instance in a current DC as an LLOF instance serving the service-based instance. This can avoid cross-DC message detour. In a possible implementation, an NF instance only configures the LLOF instance in the current DC as an LLOF instance serving the NF instance. In this case, if all LLOF instances in the DC corresponding to the NF instance are faulty, and the NF instance previously locks a context of a UE, the NF instance may notify a context storage function (for example, a DB) in an instance set to which the NF instance belongs to unlock the context of the UE. In this way, the UE may be subsequently served by an NF in another DC.

S1020: The initial LLOF instance determines a target LLOF instance.

The initial LLOF instance may determine, based on a context of a terminal device, that a service-based instance associated with the terminal device is served by the target LLOF instance. Therefore, the initial LLOF instance may send parameter information in the non-service-based message to the target LLOF instance, and the target LLOF instance sends the parameter information to the service-based instance.

Alternatively, when the initial LLOF instance finds that all service instances in the DC are faulty, the initial LLOF instance may determine, from an LLOF instance set, a target LLOF instance located in another DC, and send parameter information in the non-service-based message to the target LLOF instance. The target LLOF instance selects, for the terminal device, an available service-based instance located in the same DC as the target LLOF instance to serve the terminal device.

S1030: The initial LLOF instance sends a redirection message to the target LLOF instance.

The redirection message includes the parameter information of the non-service-based message.

The redirection message may be a message used to transmit information between different LLOF instances. For example, the redirection message may be an Nllof_Message_Redirect service request message.

Optionally, the redirection message further includes routing identification information. The routing identification may be the routing identification information included in the non-service-based message. The routing identification information and the parameter information of the non-service-based message may respectively be two information fields. For example, the redirection message includes two information fields: the routing identification information and the parameter information (for example, a binary bit stream) of the non-service-based message. Therefore, the target LLOF instance may directly obtain a routing identifier from the routing identification information field, and may not need to parse the binary bit stream of the parameter information of the non-service-based message to obtain the routing identifier. For more detailed descriptions of the routing identification information, refer to the descriptions in FIG. 8. Details are not described herein again.

In a possible implementation, the redirection message may further include information indicating the service-based instance, for example, identification information or address information of the service-based instance.

For example, if the initial LLOF instance may determine, based on the non-service-based message, a target instance that receives the non-service-based message, that is, the service-based instance, the initial LLOF instance may include, in the redirection message, the information indicating the service-based instance, for example, an identifier, an IP address, or an FQDN. In this way, the target may send the parameter information of the non-service-based message in the redirection message, for example, a bit stream of a payload part of the non-service-based message, to the service-based instance.

In a possible implementation, the redirection message may further include a source/destination IP address of the non-service-based message and a source/destination port number of the non-service-based message.

Optionally, in S 1040, the target LLOF instance determines the service-based instance.

If the redirection message includes the information about the service-based instance, the target LLOF may determine the service-based instance based on the information. If the redirection message does not include the information about the service-based instance, but includes the routing identifier, the target LLOF may obtain the context of the terminal device based on the routing identifier, and determine the information about the service-based instance based on the context. If the redirection message includes the information about the service-based instance, the target LLOF may determine the service-based instance based on address information of the non-service-based message in the redirection message. For a specific implementation, refer to the descriptions of S820 in the method 800. Details are not described herein again.

S 1050: The target LLOF instance sends a second message to the service-based instance, and correspondingly, the service-based instance receives the second message from the target LLOF instance.

The target LLOF instance sends the second message to the service-based instance through a service-based interface.

The descriptions of step S1050 refer to the descriptions of the second message in step S850. Details are not described herein again.

According to this technical solution, the service-based instance and the non-service-based instance may interact with each other via a plurality of LLOF instances. This can improve flexibility of message transmission in a communication system.

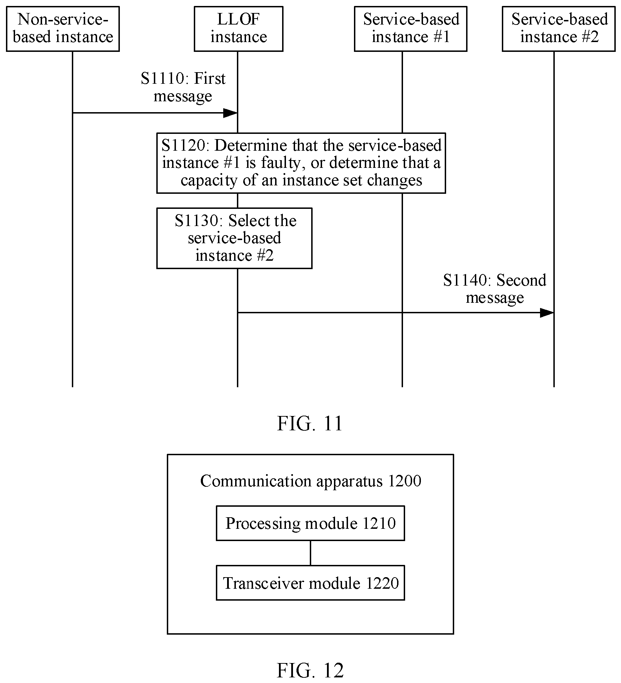

The foregoing describes interaction between the service-based instance and the non-service-based instance via the LLOF instance. According to the interaction method provided in this embodiment of this application, when one instance, for example, the service-based instance, needs to be replaced, a communication connection between the LLOF instance and the non-service-based instance may not need to be re-established for the interaction. This is described below with reference to FIG. 11.

FIG. 11 is a schematic flowchart of a method for replacing an instance according to an embodiment of this application.

S1110: A non-service-based instance sends a first message to an LLOF instance, and correspondingly, the LLOF instance receives the first message from the non-service-based instance.

The first message is a non-service-based message.

The non-service-based message may be a UE-level or service-level NGAP message transmitted between a RAN and an AMF, a GTP-C message transmitted between an MME and an AMF, or a session-level PFCP message transmitted between a UPF and an SMF.

The non-service-based message may include routing identification information. The descriptions of step S1110 refer to the descriptions of the first message in step S810. Details are not described herein again.

S1120: The LLOF instance determines that a service-based instance #1 is faulty, or determines that a capacity of an instance set changes.

The service-based instance #1 is a service-based instance determined by the LLOF instance based on the first message.

For example, the LLOF instance determines information about the service-based instance #1 based on the routing identification information in the first message, but finds that the service-based instance #1 is faulty. For example, the LLOF instance fails to send a message to the service-based instance #1, and therefore determines that the service-based instance #1 is unavailable.

For another example, the LLOF instance receives indication information indicating that the service-based instance #1 is faulty. For example, an NRF or operations, administration, maintenance (operation and maintenance, OAM) sends the indication information to the LLOF instance, and the LLOF instance determines, based on the indication information, that the service-based instance #1 is faulty.

For another example, the LLOF instance determines that the capacity of the instance set to which the service-based instance #1 belongs changes. For example, the LLOF instance receives, from an NRF or OAM, indication information indicating that the capacity of the instance set to which the service-based instance #1 belongs changes. Alternatively, the LLOF instance receives a registration (for example, an instance goes online) message, a deregistration (for example, an instance goes offline) message, or an update message (for example, indicating an instance capacity change) sent by an instance in the instance set, and determines that the capacity of the instance set to which the instance #1 belongs changes. The LLOF determines, based on the capacity change of the instance set, to select another service-based instance for a terminal device. For example, an instance is newly created in the instance set. The LLOF instance determines that load of the service-based instance #1 is excessively heavy compared with load of the newly created instance, and some terminal devices on the service-based instance #1 need to be migrated to reduce the capacity of the instance set.

S1130: The LLOF instance selects a service-based instance #2.

The LLOF instance may select, from the instance set to which the service-based instance #1 belongs, the service-based instance #2 to provide a service for the UE.

It can be learned that, in a process in which the LLOF instance selects the service-based instance #2, the non-service-based instance may not be notified, and then the non-service-based instance may continue to send a message by using the routing identification information in step S1110. That is, the non-service-based instance may not sense a change of the service-based instance.

S1140: The LLOF instance sends a second message to the service-based instance #2, and correspondingly, the service-based instance #2 receives the second message from the LLOF instance.

The descriptions of step S1140 refer to the descriptions of the second message in step S850. Details are not described herein.

According to this technical solution, the LLOF instance can be responsible for replacing a service-based instance. When the service-based instance is faulty, a corresponding instance in a context of the terminal device can be replaced with another available instance in the instance set, supporting redundancy and load balancing/rebalancing of the service-based instance. In addition, the LLOF instance shields a fault of the service-based instance, that is, the non-service-based instance does not sense the fault and reselection of the service-based instance. In other words, even if a connection between the LLOF instance and a second instance is replaced with a connection between the LLOF instance and a third instance, a communication link between the LLOF instance and a first instance may not need to be re-established.

The foregoing describes the method embodiments in embodiments of this application, and the following describes corresponding apparatus embodiments. It should be understood that descriptions of the apparatus embodiments correspond to the descriptions of the method embodiments. Therefore, for content that is not described in detail, refer to the foregoing method embodiments.

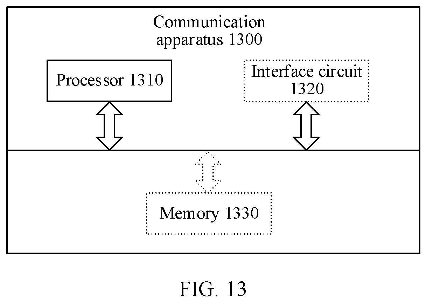

FIG. 12 and FIG. 13 are diagrams of structures of possible communication apparatuses according to embodiments of this application. These communication apparatuses may be configured to implement a function of the LLOF instance in the foregoing method embodiments, and therefore can also implement beneficial effects of the foregoing method embodiments. In embodiments of this application, the communication apparatus may be an LLOF instance, or may be a module (for example, a chip) used in the LLOF instance.

As shown in FIG. 12, a communication apparatus 1200 includes a processing module 1210 and a transceiver module 1220. The communication apparatus 1200 is configured to implement a function of the LLOF instance in the method embodiments shown in FIG. 6 to FIG. 11. Alternatively, the communication apparatus 1200 may include a module configured to implement any function or operation of the LLOF instance in the method embodiments shown in FIG. 6 to FIG. 11. The module may be all or partially implemented by using software, hardware, firmware, or any combination thereof.

When the communication apparatus 1200 is configured to implement the function of the LLOF instance in the method embodiments shown in FIG. 6 to FIG. 11, the transceiver module can be connected to a service-based instance through a service-based interface, and the transceiver module 1220 can be connected to a non-service-based instance through a non-service-based interface. The transceiver module is configured to receive a first message from a first instance through a first-type interface. The processing module 1210 is configured to determine information about a second-type transmission interface based on the first message. The transceiver module 1220 is further configured to send a second message to a second instance through the second-type interface based on the first message and the information about the transmission interface, where the first-type interface is the service-based interface, and the second-type interface is the non-service-based interface; or the first-type interface is the non-service-based interface, and the second-type interface is the service-based interface.

According to this technical solution, the LLOF instance may have information about transmission interfaces of a plurality of types of interfaces, for example, information about a service-based-type transmission interface and information about a non-service-based-type transmission interface. In addition, the LLOF instance may have a capability of converting a message received from the service-based interface into a message sent by the non-service-based interface, and a capability of converting a message received from the non-service-based interface into a message sent by the service-based interface. Therefore, in a communication system including the LLOF instance, when two instances having different types of interfaces need to communicate with each other, the instances may no longer need to support both the service-based interface and the non-service-based interface. In addition, when a communication connection between the LLOF instance and one of the instances needs to change, a communication connection between the LLOF instance and the other instance may not need to be re-established. This improves flexibility of message transmission in the communication system.

For more detailed descriptions of the processing module 1210 and the transceiver module 1220, directly refer to related descriptions in the method embodiments shown in FIG. 3 to FIG. 11. Details are not described herein again.

As shown in FIG. 13, the communication apparatus 1200 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1200 may further include a memory 1330, configured to store instructions to be executed by the processor 1310, store input data required by the processor 1310 to run the instructions, or store data generated after the processor 1310 runs the instructions.

When the communication apparatus 1200 is configured to implement the methods shown in FIG. 6 to FIG. 11, the processor 1310 is configured to implement a function of the processing unit 1210, and the interface circuit 1320 is configured to implement a function of the transceiver unit 1220.

When the communication apparatus is the chip used in the LLOF instance, the LLOF instance chip implements the function of the LLOF instance in the foregoing method embodiments. The LLOF instance chip receives information from another module (such as a radio frequency module or an antenna) in the LLOF instance, where the information is sent by another instance to the LLOF instance. Alternatively, the LLOF instance chip sends information to another module (such as a radio frequency module or an antenna) in the LLOF instance, where the information is sent by the LLOF instance to another instance.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, to enable the processor to read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that in this application, "when" and "if" both indicate that corresponding processing is performed by a network element in an objective case, are not intended to limit time, do not require a determining action to be performed during implementation of the network element, and do not imply that there is any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may alternatively be obtained based on the foregoing rule.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A message transmission method, wherein the method is applied to a link load orchestration function instance, the link load orchestration function instance is connected to a service-based instance through a service-based interface, the link load orchestration function instance is connected to a non-service-based instance through a non-service-based interface, and the method comprises:
receiving a first message from a first instance through a first-type interface;
determining information about a second-type transmission interface based on the first message; and
sending a second message to a second instance through the second-type interface based on the first message and the information about the transmission interface, wherein
the first-type interface is the service-based interface, and the second-type interface is the non-service-based interface; or the first-type interface is the non-service-based interface, and the second-type interface is the service-based interface.

2. The method according to claim 1, wherein the determining information about a transmission interface based on the first message comprises:
determining a context of a terminal device based on the first message, and determining the information about the transmission interface based on the context of the terminal device.

3. The method according to claim 2, wherein the first-type interface is the service-based interface, the second-type interface is the non-service-based interface, the first message comprises a context identifier of the terminal device, the information about the transmission interface comprises at least one of the following information: internet protocol IP address information of the non-service-based instance and a port number of the non-service-based instance, and the determining a context of a terminal device based on the first message comprises:
determining the context of the terminal device based on the context identifier.

4. The method according to any one of claims 1 to 3, wherein the first-type interface is the service-based interface, the second-type interface is the non-service-based interface, the first message comprises a notification address, and the method further comprises:
sending, based on the notification address, a notification message to the service-based instance through the service-based interface, wherein the notification message comprises at least one of the following information: result information and reason information, the result information indicates whether the second message is successfully sent, and the reason information indicates a reason why the second message fails to be sent; and/or
receiving, from the non-service-based instance, a first response message that is in response to the second message, and sending a second response message to the service-based instance based on the first response message and the notification address.

5. The method according to claim 3 or 4, wherein the first message is used to request a first link load orchestration function instance to send parameter information in the first message.

6. The method according to any one of claims 3 to 5, wherein the first message comprises type information, and the type information indicates the second type; or a message type of the first message is associated with the second type.

7. The method according to any one of claims 3 to 6, wherein the first message comprises a binary bit stream of the parameter information, and the second message comprises the binary bit stream; or
the method further comprises:
performing encoding processing on the parameter information in the first message, wherein the second message comprises a binary bit stream of encoding-processed parameter information.

8. The method according to claim 1 or 2, wherein the first-type interface is the non-service-based interface, the second-type interface is the service-based interface, and the information about the transmission interface comprises a notification address of the service-based instance.

9. The method according to claim 8, wherein the first message comprises routing identification information, and the determining a context of a terminal device based on the first message comprises:
determining the context of the terminal device based on the routing identification information, wherein the context of the terminal device comprises the routing identification information.

10. The method according to claim 8, wherein the determining a context of a terminal device based on the first message comprises:
creating the context of the terminal device based on the first message, wherein the context of the terminal device comprises information about the non-service-based instance, the second message comprises a context identifier of the terminal device, and the information about the non-service-based instance comprises at least one of the following information: IP address information of the non-service-based instance and a port number of the non-service-based instance.

11. The method according to any one of claims 8 to 10, wherein the first message comprises a binary bit stream of parameter information, and the second message comprises the binary bit stream; or
the method further comprises:
decoding the binary bit stream in the first message, wherein the second message comprises decoding-processed parameter information.

12. The method according to any one of claims 9 and 10, wherein the method further comprises:
determining the second instance based on the context of the terminal device and the first message, wherein the context of the terminal device comprises information about an instance set, and the instance set comprises the second instance.

13. The method according to any one of claims 9 to 12, wherein the method further comprises:
determining that the second instance is faulty, or determining that a capacity of the instance set changes, wherein the instance set comprises the second instance;
determining a third instance based on the context of the terminal device, wherein the context of the terminal device comprises the information about the instance set, and the instance set further comprises the third instance; and
sending, based on the first message, a third message to the third instance through the second-type interface.

14. The method according to any one of claims 1 to 13, wherein the method further comprises:
receiving an allocation request message from the service-based instance, wherein the allocation request message is used to request allocation of the routing identification information; and
sending the routing identification information to the non-service-based instance, wherein the routing identification information is used for information transmission between the service-based instance and the non-service-based instance.

15. The method according to any one of claims 1 to 14, wherein if the non-service-based instance is a radio access network instance, the service-based instance is an access and mobility management instance; if the non-service-based instance is a user plane function instance, the service-based instance is an access and mobility management instance; or if the non-service-based instance is a mobility management entity instance, the service-based instance is an authentication management function instance.

16. A communication apparatus, comprising a module configured to perform the method according to any one of claims 1 to 15.

17. A communication apparatus, comprising: a processor, configured to execute a computer program stored in a memory, to enable the apparatus to perform the method according to any one of claims 1 to 15.

18. The apparatus according to claim 17, wherein the apparatus further comprises the memory.

19. A computer-readable storage medium, wherein the computer-readable storage medium stores a computer program, and when the computer program is run on a computer, the computer is enabled to perform the method according to any one of claims 1 to 15.

20. A computer program product, comprising computer program code, wherein when the computer program code is run on a computer, the computer is enabled to implement the method according to any one of claims 1 to 15.

21. A communication apparatus, comprising: a processor, configured to execute a computer program stored in a memory, to enable the apparatus to perform the method according to any one of claims 1 to 15.

22. The apparatus according to claim 21, wherein the apparatus further comprises the memory.
